# EUROPEAN PATENT APPLICATION

(11) **EP 3 757 424 A1**
(43) Date of publication of application: **30.12.2020**
(21) Application number: 19000310.3
(22) Date of filing: 28.06.2019
(51) Int. Cl.: F16H 3/12, F16H 1/08, F16D 3/10

(54) **POWER TRANSMISSION SYSTEM WITH AT LEAST ONE ENGAGEMENT COMPONENT AND DIVIDED GEAR WHEELS**

(71) Applicant: Kontopoulos, Leonidas-Kyros, 14059 Berlin (DE); Kontopoulos, Kyros-Philippos, 81371 München (DE)
(72) Inventor: KONTOPOULOS, Konstantinos, 60596 Frankfurt am Main (DE)
(74) Representative: Keil & Schaafhausen Patentanwälte PartGmbB

(57) **Abstract**

The present application relates to a power transmission system 1 comprising divided gear wheels 200, to an engagement component 320, to a power transmission system and a method to operate said power transmission system. The power transmission system 1 comprising at least one input shaft 10, at least one output shaft 20, with at least, one divided gear wheel 200 in every gear ratio, a Central Processing Unit, commanding a gear changing action after assessing and processing the provided data from corresponding measuring instruments and sensors, and at least one shifting mechanism 400 comprising at least one engagement component 320, that temporarily and/or instantaneously engages two different gear ratios, allowing for a smooth, continuous power transfer from engine to wheels and without power loss in friction disks.

## Description

### FIELD OF THE INVENTION

The present application relates to the field of power transmission systems and in particular to a power transmission system with the use of at least one divided gear wheels per gear ratio, to a method to operate a power transmission system and to an automotive vehicle comprising a power transmission system.

### BACKGROUND

Power transmission systems (e.g. gearboxes) are adapted by known automotive vehicles, such as trucks, cars, motorbikes or the like, in order to provide a range of speed and torque outputs, which are necessary during the movement of the vehicle.

Power transmission systems adapt the output of the engine of the vehicle (usually we are talking about an internal combustion engine) to the wheels. As it is known engine may rotate in a relative high rotational speed compared to the wheels which is not suitable for starting, stopping, and slower travel of the vehicle. This is where power transmission system play its role, decreasing higher engine speed to the slower wheel speed, increasing torque in progress and vice versa.

In addition engines have an uneven distribution of torque and power outputs across the rev range. Commonly the greatest torque is required when the vehicle moves with low speed, while the maximum power is needed in higher speed. Again here is where power transmission systems are adapted in order to provide high torque at lower speed but also operate the engine within its limits at high speeds.

In common days, gearboxes have several gears/gear ratios in order to cover a wide range of torque and/or rotation speed. The gear ratio i is the ratio or the rotational speed of the input gear wheel *ωᵢₙ* to the rotational speed of the output gear wheel *ωₒᵤₜ.* $i = \frac{{ω}_{in}}{{ω}_{out}}$

Modern vehicles adapt gearboxes with multiple gears in order to operate to achieve goals such as maximum torque, maximum power, optimal efficiency etc. An important goal that modern engines desire to achieve is to operate within the so called area of Brake Specific Fuel Consumption (BSFC), wherein BSFC is a measure of the fuel efficiency of a combustion engine. In order to achieve improved fuel economy, the engine should operate within the area of BSFC, and this is achieved by the provision of numerous gear ratios.

There are various categories of power transmission systems such as manual, semi - automatic and fully automatic systems where gear ratio change occurs automatically as the vehicles moves. As modern gearboxes comprise more gear ratios semi-automatic and fully automatic systems increase their popularity since the frequent manual gear change is not user friendly. Automatic transmission systems are transmission system that allow for an automatic gear change without the interference of the driver. Some systems even provide the opportunity to shift gears by the driver on demand but again the gear changing action is not taken place by the hand movement of the driver but with some mechanism.

There are numerous semi-automatic or automatic power transmission systems such as 1) Automated manual transmission (SAT), 2) Continuously Variable Transmission (CVT), 3) Dual Clutch Transmission (DCT), 4) Direct Shift Gearbox (DSG), 5) Tiptronic Transmission 6) Dog Clutch automotive transmissions and many others.

Unfortunately most of those systems do not continuously transfer power to the wheels, during the gear upshifting. In addition those which do transfer power continuously suffer from energy losses.

The presentation of the current innovation at least partly overcomes the previously mentioned drawbacks of the current systems. In particular, the power transmission system presented, allows for smooth and continuous power transferring when upshifting gear ratios (and for reduced power losses due to absence of clutch disk friction in every gear change).

### SUMMARY

The previously mentioned drawback are at least partly solved by a divided gear wheel according to claim 1, a power transmission system according to claims 6 to 17 and a method to operate a power transmission system according to claim 18 to 19 and an automotive vehicle according to claim 20.

In particular, the objects are at least partly achieved by the use of at least one divided gear wheel per gear ratio for a power transmission system, wherein the divided gear wheel comprises an inner part being engageable with the shaft with the help of an dog clutch (serving as an engagement component), and an outer part, comprising at least one tooth that is coupled to another gear wheel resulting in a gear ratio. The torque transmission can be achieved only when an engagement component, being torque proof engaged with the assigned shaft, is engaged with the inner part of a divided gear wheel via engagement means (teeth). Both inner part and outer part of the divided gear wheel have a common rotational axis and the inner part is at least partially arranged within the outer part and the inner part is coupled to the outer part by means of at least one elastic element (e.g. spring), so that the inner part is arranged angularly deflectable with respect to the outer part around the common rotational axis. Bearings will assist with the rotational motion in all the rotating parts (between inner and outer parts of the divided gear wheel, between the assigned shaft and the inner part of the divided gear wheel). Both inner and outer part are adapted to rotate with the same angular speed if the elastic element (e.g. spring) is fully loaded.

The inner part can transfer force to the outer part via the elastic element and vice versa. As the inner part is angularly deflectable with respect to the outer part the corresponding elastic element is compressed or decompressed, depending on the direction of deflection and the arrangement of the elastic element / form of the gear parts. It is going without saying that the shape of the inner part is in relation to the shape of the outer part. In addition, inner and outer parts can be coupled with more than one elastic element (e.g. spring). Due to this compression/decompression of the elastic element(s), forces can be transferred from the inner part to the outer and vice versa. In addition the inner part has engagement means in at least one of its surfaces, in order to receive/deliver power to the engaged component.

Each set of gear wheels forming a gear ratio comprise at least one divided gear wheel with its inner part being engageable with the shaft with the help of an engagement component (e.g. dog clutch ring). In a preferred embodiment, the first and second divided gear wheels will have a shared dog clutch in between them and each of the divided gear wheels sharing a dog clutch, is engaged with the assigned shaft with the help of an engagement component (one dog clutch ring for each divided gear wheel). Respectively the third and fourth divided gear wheels will also have a shared dog clutch in between them and so on. Each dog clutch is consisted of a dog clutch hub and two engagement components (e.g. dog clutch rings). For the preferred embodiment, two consecutive engagement components (e.g. dog clutch rings) are housed in a single dog clutch hub and are torque proofed engaged with the hub, which is constantly engaged with the shaft. The dog clutch hub has a generally cylindrical shape and is torque proofed connected to the shaft, either by splines on its inner circumference or by being uniformly formed to the shaft. The dog clutch hub has guiding channels on its outer circumference/surface in which the engagement components are housed and (the engagement components - dog clutch rings) can be axially moved, engaging or disengaging to the according inner part of the divided gear wheel. The guiding channels can be either linearly shaped or helically. When the channels are helically shaped, the axial movement of the engagement components result in an additional rotation, compensating the difference in angular velocities between the components that are going to be engaged. As previously mentioned each divided gear wheel has a single engagement component assigned but each dog clutch hub houses two engagement components, the one opposing to the other that can be moved independently, but are torque proofed engaged with the hub (and as a consequence to the assigned shaft). It is going without saying that the engagement components guided by guiding channels, can be directly housed in the assigned shaft with the guiding channels position directly on the outer circumferential surface of the assigned shaft.

In the presented exemplary configuration the engagement component (e.g. dog clutch ring) has engagement means (teeth) on its front face and engagement means on the inner circumference of the ring, adapted to interact with the dog clutch hub, resulting in a common rotational speed. As it is obvious, the so called engagement means (teeth) on the face of the engagement component can either be protrusion or cavities, always in accordance to the engagement means of the inner part of the divided gear wheel in order to achieve interaction/engagement. Furthermore, the engagement means of the inner part of the divided gear wheel do not have to have the exact "imprint" with the engagement means of the engagement components, but they can be "larger", assisting with the engagement of both parts. In any case the engaging surfaces for both the engagement means of the inner part of the divided gear wheel, and the engagement means of the engagement component, will be corresponding to each other.

The axial movement(s) of the engagement component(s) is accomplished with the help of shifting mechanism(s) that command a gear ratio changing action after certain processes in the CPU. The shifting mechanism(s) can be a mechanical, a hydraulic, an electric or a pneumatic actuator or the like. The shifting mechanism(s) can push (or pull) the engagement component(s) with axial velocities, depending on the needs.

The engagement component (e.g. dog clutch ring) is engageable with the inner part of the divided gear wheel which can either be an input gear wheel or an output gear wheel. The temporary engagement is established by at least one engagement element (for example tooth as presented in the drawings) that is adapted to engage with the desired inner part of the divided gear wheel in order to temporary fix the, otherwise torque free, divided gear wheel so as to rotate with an assigned shaft. Accordingly torque can be transferred from the inner part to the shaft and vice versa.

It is going without saying that the outer part of the divided gear, forms the actual gear portion and can comprise any type of gearing. In addition this outer part of the divided gear wheel is the one that meshes constantly with another gear wheel (or with another outer part of a divided gear wheel) creating a gear ratio.

As the inner part is deflectable with respect to the outer part and is coupled to the outer part by means of at least one elastic element, differences in angular velocity (between two gear ratios) during a gear ratio changing action can be compensated. This is, as during the gear ratio changing action the elastic element is loaded, due to a difference in angular velocity between the inner and the outer part of the divided gear wheel. The loaded elastic element thus can store power and return the stored power to the system, allowing for progressing force/power transfer.

The at least one elastic element can be a spring element, such a torque spring or a spiral spring, or any other type of spring. Further, different types of elastic elements can be combined in a divided gear wheel in order to achieve a desired spring characteristic.

The at least one elastic element can be a spring element and can be received within a spring compartment, formed by the inner part and the outer part of the divided gear wheel.

The divided gear wheel can further comprise at least one spring, preferably at least two springs, preferably at least four springs and even more according to the needs, wherein the springs can be arranged evenly distributed in a circumferential direction. Further, it is possible to combine spring and damping elements. The maximum deflection angle of the inner part is inter alia dependent on the number of springs used. If only one spring is provided, the maximum deflection angle can be well above 180°, e.g. in a range of 200° to 300°. In case of multiple springs that are arranged evenly distributed in a circumferential direction, the maximum deflection angle, and thus the available engagement time, is reduced.

Particularly, a first spring element can be partially arranged within a second spring element and can protrude out of the second spring element on a front face, wherein a spring rate of the first spring element can be lower than a spring rate of the second spring element. For example, as presented, a set of two spring elements can be incorporated in a divided gear wheel. The set of spring elements will comprise one spring element having a bigger diameter concentrically placed to a spring element having a smaller diameter with the spring element with the smaller diameter protruding out of the spring element having a bigger diameter on a front face. Further, these spring elements could have different spring rates, with the "softer" spring element beginning to compress initially upon deflection of the inner part and subsequently the "stiffer" spring element will be compressed. It is worth mentioning that when the "stiffer" spring element compresses, the compression of the "softer" spring element has not been completed, but continuous as the compression of the "stiffer" spring element progresses, due to the layout. Thus, a step-wise spring characteristic can be achieved, resulting in smooth gear ratio changing actions. Further, with the use of a "softer" spring element, the engagement between the engagement component and the inner part of the assigned gear wheel is facilitated as a person skilled in the art can understand.

The engagement means of the engagement component can be provided for example on a front face of the ring (in another alternative, the engagement means are provided on the inner circumferential surface of the inner part of the divided gear wheel), and can be, for example, shaped as engagement teeth, with curved points and angled sides. It is going without saying that the engagement means can comprise grooves or recesses.

The objects are further at least partly achieved by a proposed power transmission system, e.g. for an automotive vehicle, that comprises at least one input shaft, supporting input gear wheels and an output shaft, supporting output gear wheels. Each of the input gear wheels engages with a corresponding output gear wheel, thereby defining a gear ratio. At least one of the input gear wheels and/or at least one of the output gear wheels of each gear ratio is a torque free divided gear wheel that can be torque fixed to the shaft upon engagement with the help of an engagement component (e.g. dog clutch ring) when desired. The power transmission system further comprises at least one engagement component (e.g. dog clutch ring) that is assigned to the input shaft or the output shaft and to one free to rotate divided gear wheel. The engagement component is arranged axially movable along the assigned shaft to change a gear ratio, wherein the engagement means (teeth) on (exemplary) the face of the engagement component are adapted to engage with the assigned inner part of the divided gear wheel, thereby torque proof fixing the assigned gear wheel with the shaft.

A gear ratio is formed by two gear wheels, wherein a first gear wheel can be a fixed gear wheel, i.e. permanently engaged with a shaft, and a second gear wheel is a free gear wheel, i.e. adapted to be temporarily engaged with a shaft with the help of a engagement component. Either of the first or second gear wheels can be an input gear wheel or an output gear wheel. Further, at least one engagement component is assigned per every gear ratio. As the outer part of the divided gear wheel is deflectable with respect to the inner part of the divided gear wheel and as the inner part is coupled to the outer part by means of at least one spring, differences in angular velocity during a gear ratio changing action can be compensated.

The input shaft can be powered by an engine and the output shaft can power the wheels of an automotive vehicle. By engaging the engagement component with an assigned divided gear wheel, the inner part of the divided gear wheel is torque proof fixed to the assigned shaft. By this engagement of the engagement component with the assigned inner part of the divided gear wheel power transfer can be achieved. Accordingly, by engaging different dog clutches, different gear ratios can be chosen.

In an initial state, the power transmission system can operate with a first gear ratio selected, with the help of a clutch. Apart from the initial state where a clutch is needed, all of the other gear ratio changing actions take place with an absence of a clutch engagement/disengagement. Accordingly, power is transferred from the input shaft to the output shaft by means of a first pair of gear wheels that define the first gear ratio. A second gear ratio can be defined by a second pair of gear wheels. When a gear changing action, from the first to the second gear ratio, has completed, the first pair of gear wheels must not transfer power to the output shaft and the second pair of gear wheels must be engaged, transferring power. The engagement is achieved by means of a engagement component(s) that is assigned to the free divided gear wheel(s) of the second pair of gear wheels. A different engagement component(s) is assigned to the free divided gear wheel(s) of the first gear ratio. In the initial state, the engagement component, by which the divided gear wheel of the second gear ratio will be engaged with, rotates with an angular velocity (the same as the velocity of the assigned shaft since it is torque proof engaged with the assigned shaft via the dog clutch hub) that is different from the angular velocity of the free divided gear wheel that is going to be engaged. A Central Processing Unit (CPU) with the help of according sensors checks the linear and angular position of the engagement component(s) and the angular position of its/their assigned divided gear wheel(s) (both inner and outer parts of the divided gear wheel), the angular velocities of both the components that are going to be engaged and takes account of engines rotations per minute (rpm), engine speed, selected gear ratio, wheel speed etc., before commanding the gear ratio changing action. Calculations takes place in order, the exemplary presented protrusions of the engagement component (e.g. dog clutch ring), to meet the exemplary presented cavities of the engagement means of the inner part of the divided gear wheel. A shifting mechanism pushes or pulls linearly the engagement component (assigned to the next gear ratio) in order to be engaged with the desired divided gear wheel that is meant to rotate freely when it is not engaged with the shaft via the dog clutch. When the engagement component is engaged with the desired divided gear wheel the soft spring(s) inside the divided gear wheel starts to compress. At this moment both engagement components in first and second gear ratio are engaged with each divided gear wheel but the one in the first gear ratio has the inner spring(s) fully compressed and therefore fully bearing load. As the spring(s) on the second gear ratio bear more load, the spring(s) load inside the divided gear wheel of the first gear ratio, begins to decrease and the stored energy is given back to the system. The moment the spring(s) inside the divided gear wheel of the first gear ratio is nearly unloaded (at this moment power is delivered to the output shaft via the second gear ratio), a command is given by the CPU to disengage the engagement component from the first gear ratio. In addition the energy stored in the springs inside the divided gear wheel of the first gear ratio has returned to the system.

As a person skilled in the art understands, the previously described upshifting action was with the accelerator pedal pressed. In case the accelerator pedal was not pressed the CPU takes account of the angular position and the angular velocities, of both the inner part and the outer part of the divided gear wheel that the engagement component is going to engage. Depending on the processed data from the CPU, a command is given to the engine, to increase momentarily the rotations of the input shaft (so that the angular velocity of the outer part of the divided gear wheel is the one that solely increases) in order the disengagement / engagement to take place. The disengagement / engagement without the momentarily increase in the input shaft's rotation is possible with an increased force provided by the shifting mechanism.

In order to change gear downwards (downshifting) for example from second gear ratio to the first gear ratio the following actions must take place. As the engagement component is engaged with the second gear ratio, according to the measurements taken from according sensors, a gear changing action command is given by the CPU, so the engagement component assigned to the first gear ratio begins to move (CPU recognizes via angular position sensors, if the divided gear wheel of the second gear ratio, gives power to the wheels or if it receives power from the wheels).

In the scenario where the accelerator pedal is pressed (gives power to the wheels), a momentarily power cut (idling) is commanded from the CPU to the engine and as a result springs begin to decompress. As soon as the springs of the engaged second gear ratio are decompressed (at least the stiffer springs), the CPU commands a disengagement action from the currently engaged engagement component of the inner part of the divided gear wheel of the selected second gear ratio and a simultaneous engagement of the engagement component assigned to the inner part of the divided gear wheel of the first gear ratio.

In the scenario where the accelerator pedal is not pressed (receives power from the wheels) the CPU checks again the angular position of the inner and outer parts of the engaged divided gear wheel (and therefore the status of the inner springs) via angular position sensors. In case the inner springs of the engaged divided gear wheel are compressed, the CPU commands an engagement action to the divided gear wheel of the first gear ratio. As soon as the engagement of the inner part of the divided gear wheel of the first gear ratio takes place, the rotations from the engine (input rotations) increase and as a consequence the springs inside the divided gear wheel of the second gear ratio start to decompress. Therefore the CPU can command a disengagement action to the divided gear wheel of the second gear ratio. A detail description will be presented further on.

Additionally or alternatively, both of the engagement means (teeth) of the engagement component and the engagement cavities (or vice versa) of the inner part of the divided gear wheel can have trimmed edges, resulting in angled engagement surfaces. This formation of both engaging components results in smoother disengagement/engagement.

The power transmission system can further comprise a control unit that is adapted to command a gear ratio changing action. The control unit can be fully automatic, so as to operate the engine at a desired operating point (BSFC or maximum torque), and/or the control unit can forward user commands so as to allow the user to command a desired gear ratio. In addition specific measuring instruments (i.e. sensors etc.) will be included providing additional data to the control unit.

The objects are further at least partly achieved by a method of operating a power transmission system, the method comprising the following steps: Rotating the input shaft and transferring power to the output shaft by means of an initial gear ratio. After collecting and processing the corresponding data, commanding a gear ratio changing action from the initial gear ratio to the following or previous gear ratio. Axially moving at least one engagement component and thereby engaging the inner part of the divided gear wheel of the following or previous gear ratio, torque proof fixing with the assigned shaft the following or previous inner part of the divided gear wheel and as a result compressing the springs inside the divided gear wheel, axially moving at least one engagement component assigned to the previous or following gear ratio disengaging the inner part of the divided gear wheel of the previous or following gear ratio. Rotating the input shaft and transferring power to the output shaft by means of the following or previous gear ratio.

Further, in an alternative, during axial moving the at least one engagement component, the engagement component can be guided by helical means and rotated relative to the assigned shaft in order to compensate a difference in angular velocity at the beginning of the commanded gear ratio changing action between the assigned shaft and the gear wheel to be engaged of the following gear ratio. Thus, a smoother gear ratio changing action can be achieved.

As a person skilled in the art understands, due to the fact that the inertia of the inner part of the divided gear wheel is small, even without adapting helical guiding means, the engagement for a difference in angular velocities between the engaging components (i.e. inner part of the divided gear wheel and engagement component) until 1000rpm does not cause any problems. In addition in common power transmission systems, the inertia is greater in comparison to the inertia of the presented innovation since the entire input shaft and gear wheels contribute to the system's inertia. In contrast in the proposed configuration due to the fact that "soft" springs are adapted inside the divided gear wheels, only the inner part of the divided gear wheel that is going to be engaged with the engagement component contributes to the system's inertia.

Due to this fact, we prefer to engage the component to the inner part of a divided gear wheel and not to a common gear wheel, meshing with the outer part of a divided gear wheel, which has greater inertia.

As mentioned before, it is going without saying that both of the gear wheels consisting a gear ratio can be divided gear wheels (both engageable or the one engageable and the other constantly engaged), providing additional time for engagement/disengagement, when needed.

In addition a single spring can be provided inside the divided gear wheel, with a variable spring constant.

The spring constant of the "softer" springs is selected in order to achieve minimum spring deformation when the divided gear wheel is not engaged with the assigned shaft, and the only deformation of the springs inside the unengaged divided gear wheel is due to inertia, friction forces from meshing gear teeth and from bearing friction forces. The spring constant of the "stiffer" springs is selected in relation to the maximum torque that each specific gear ratio will handle.

As a person skilled in the art understands, in reality, springs act as "clutches" and the existence of the "softer" springs, which are longer than the "stiffer" springs, provide the necessary time in order to completely engage/disengage the engagement component with the assigned inner part of the divided gear wheel, while the occurring load from the deformation of the spring is small (due to the small spring constant of the "soft" spring), so there is no need for using a synchromesh configuration and due to the fact that the inertia of the inner part of the divided gear wheel is small (this is why the engagement components preferably engage with their assigned inner parts of the divided gear wheels in the presented configurations).

Other alternatives following the main principle will be explained further on.

The objects are further at least partly achieved by an automotive vehicle comprising a divided gear wheel or a power transmission system as described above.

### BRIEF DESCRIPTION OF THE FIGURES

In the following, preferred embodiments of the present invention are described with respect to the accompanying figures.
- Figure 1: is a schematic illustration of a section cut of a gear ratio of a power transmission system according to a first embodiment;
- Figure 2: is a schematic illustration of a section cut of a power transmission system according to a first embodiment;
- Figure 3: is a schematic perspective exploded view of a dog clutch of a power transmission system according to a first embodiment;
- Figure 4: is a schematic perspective view of an inner and outer part of a divided gear wheel according to a first embodiment;
- Figure 5A to C: give a schematic illustration of a gear ratio changing action sequence;
- Figure 6D to F: give a schematic illustration of a gear ratio changing action sequence;
- Figure 7D to F: give a schematic illustration of a gear ratio changing action sequence;
- Figure 8: is a schematic illustration of a power transmission system according to an alternative configuration;
- Figure 9: is a schematic perspective exploded view of an engagement component, an assigned shaft and an inner part of a divided gear wheel of a power transmission system according to an alternative configuration;
- Figure 10A to B: is a schematic illustration of a power transmission system according to an alternative configuration;
- Figure 11: is a schematic perspective view of a shifting mechanism of a power transmission system according to the previously mentioned configurations;
- Figure 12: is a schematic detail illustration of the engagement means of individual parts of a power transmission system according to the previously mentioned configurations;
- Figure 13: is a schematic detail illustration of the engagement means of individual parts of a power transmission system according to the previously mentioned configurations;
- Figure 14A to B: is a schematic perspective view of an inner part of a divided gear wheel and a corresponding engagement component according to any of the previously mentioned configurations.

### DETAILED DESCRIPTION

As will become apparent from the following, the present application allows to provide a power transmission system that delivers power smoothly and continuously to the wheels when upshifting, without power losses from friction between clutch disks, due to the absence of clutch disk disengagement / engagement in every gear ratio changing action following the first gear ratio.

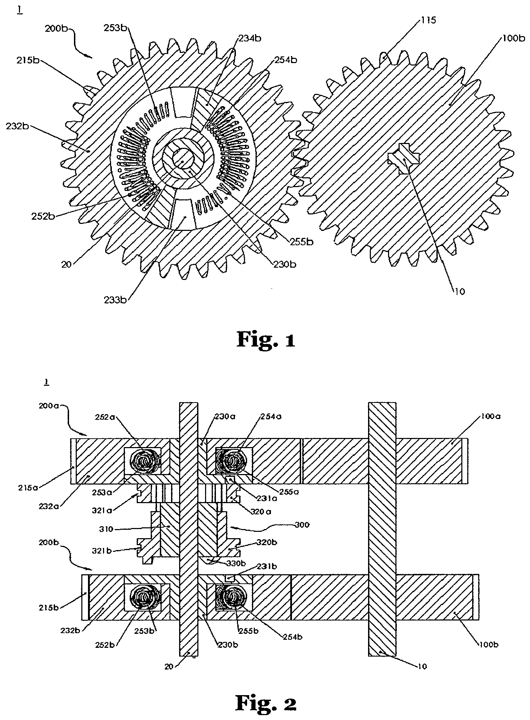

Figure 1 is a schematic illustration of a gear ratio of a power transmission system 1, defined by a divided gear wheel 200 comprising four spring elements in two spring compartments, supported by the output shaft 20, engaged with a gear wheel 100 supported by the input shaft 10.

The divided gear wheel 200 is consisted of an outer part 232 and an inner part 230 connected to one another by means of four springs 252, 253, 254, 255 able to rotate with the same angular velocity if the springs inside the divided gear wheel 200 are fully compressed (i.e. fully loaded, bearing the occurring load). The inner part 230 and the outer part 232 have a common rotational axis, and the inner part 230 is at least partially arranged within the outer part 232. Further since four springs 252, 253, 254, 255 are adapted to couple the inner part 230 and the outer part 232, the inner part 230 is angularly deflectable with respect to the outer part 232 and vice versa.

The outer part 232 of the divided gear wheel 200 has at least one tooth 215 on its outer circumference, able to transfer torque. This at least one tooth 215 is constantly meshing with the at least one tooth 115 of the gear wheel 100 which is supported by the input shaft 10 and is constantly engaged with the shaft 10. Both the divided gear wheel 200 and the gear wheel 100 are constantly meshing to each other but the power is transferred from the input shaft 10 to the output shaft 20 only when the divided gear wheel 200 is torque proof engaged with the output shaft 20 as will be described in detail further on.

The inner part 230 is not constantly engaged with the output shaft 20, but can be torque proof engaged with the shaft only when the engagement means 231 of the inner part 230 interact with the engagement means (teeth) 330 of the engagement component 320 as will be described in further detail later on. In addition the inner part is based on top of bearings (not shown), which are positioned between the assigned shaft and the inner part 230 of the divided gear wheel 200. Furthermore bearings (not shown) can also be adapted between the outer part 232 and the inner part 230 of the divided gear wheel 200, so that the outer part 232 is based on top of bearings. All of the bearings assist with an easier, smooth rotational motion between the rotating components.

Both inner part 230 and outer part 232 have two spring supports 233, 234, supporting the four springs 252, 253, 254, 255, which are preferably integrally formed with the outer part 232 or the inner part 230, respectively.

The four springs 252, 253, 254, 255, are received in spring compartments, formed by the inner part 230 and the outer part 232. In this exemplary illustration, four spring elements, housed in two spring compartments, are adapted as elastic elements, distributed around the inner circumference of the outer part 232. Each set of spring elements is consisted by two spring elements and the first spring element 253 is positioned concentrically to the second spring element 252 which has increased diameter in relation to the first spring element 253. In addition the first spring element 253 protrudes out of the second spring element 252 on a front face and preferably the first spring element 253 has a lower spring rate than the second spring element 252. In another alternative the set of two spring elements can be replaced by a single spring element with various spring rate. An analogous configuration is adapted for the other set of spring elements, where the "softer" spring element is the 255 and the "stiffer" is the 254. This "softer" spring assists with an easier, smoother engagement/disengagement between the engagement component 320 and the inner part 230 of the divided gear wheel 200, and provides the needed time in order to fully engage/disengage the engagement component 320 and the inner part 230 of the divided gear wheel 200.

In the presented exemplary configuration, all of the spring elements 252,253,254,255 will compress no matter how the rotating components rotate in relation to each other (clockwise or counterclockwise). Various design approaches can be adapted, always following the basic principle behind the innovation, where the spring elements will be lengthened instead of being compressed. Furthermore additional or fewer springs can be incorporated to the design, with a corresponding redesign of the inner part 230 and the outer part 232.

The inner part 230, also comprises engagement means 231 on its front face where the engagement means (teeth) 330 of the engagement component 320, engage and thereby torque proof fixing the inner part 230 to the output shaft 20. The engagement means 231 in this exemplary configuration are on the front face of the inner part 230. In another alternative configuration the engagement means 231 can be on the inner circumference of the inner part 230 of the divided gear wheel 200. In addition the engagement means 231 depicted here, are presented as recesses. It is going without saying that that the recesses can also be protrusions or a combination of both recesses and protrusions, always in relation to the engagement means (teeth) 330 of the engagement component 320, in order to achieve the desired engagement between the components. Furthermore the engagement surfaces between the two components can be angled resulting in smoother, easier disengagement, but in any case both engaging surfaces between the engaging parts will be corresponding to each other. Upon engagement, the inner part 230 and the output shaft 20, will be torque proof engaged. The inner part 230 and the outer part 232 of the divided gear wheel 200, rotate with the same angular velocity, when the springs 252,253,254,255 are fully loaded.

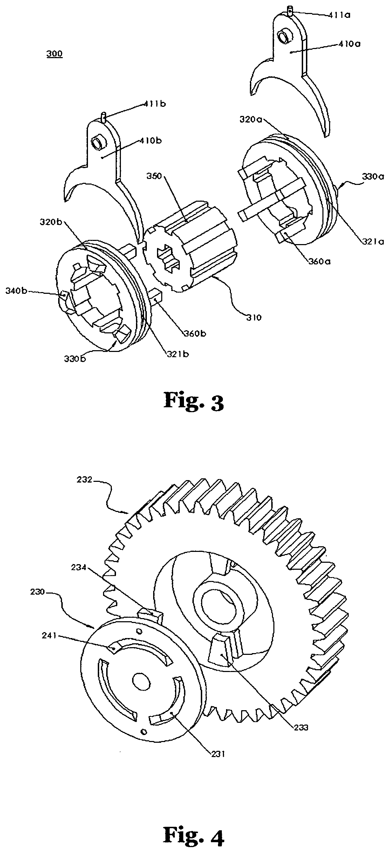

In the presented configuration, a gear ratio is defined by one divided gear wheel 200 and one gear wheel 100, constantly meshing via gear teeth 215 and 115 respectively. The divided gear wheel 200 is engageable with the output shaft 20, engaged upon engagement with the engagement means (teeth) 330 of the engagement component 320. The engagement means (teeth) 330 are not visible in the presented figure but a more clear view follows in figures 2 and 3. The gear wheel 100 is constantly engaged with the input shaft 10 and power can be transferred from one shaft to the other only when the inner part 230 of the divided gear wheel 200, is engaged with the engagement component 320. Power is transferred via the selected gear ratio, from the moment the engagement component 320 engages to the inner part 230 of the divided gear wheel 200. Even when the softer springs compress, a small amount of power is transferred to the system. The springs 252,253,254,255 do not have to be fully loaded in order to transfer torque, but upon full load, both inner part 230 and outer part 232 of the divided gear wheel 200, rotate with the same angular speed. It is going without saying that both gear wheels forming a gear ratio can be divided gear wheels, resulting in additional features for the configuration. In this scenario, both gear wheels will be divided gear wheels but again one gear wheel will be constantly engaged with the assigned shaft and the other will be free to rotate when not engaged, transferring power only upon engagement with corresponding engagement means. In other words, the inner part of the free divided gear wheel will be engageable with the shaft and the inner part of the other divided gear wheel forming a gear ratio will be constantly engaged with the assigned shaft.

Figure 2 is a schematic illustration of a gear ratio of a power transmission system 1, and more specifically a horizontal section cut of the embodiment, illustrating two consecutive gear ratios.

In this depiction, only two consecutive gear ratios are depicted but it is going without saying that the configuration can comprise more than two gear ratios in an analogous layout. In addition all the free divided gear wheels of the configuration, are supported by the output shaft 20. The same goes with the dog clutch 300. In another alternative configuration the free divided gear wheels (and the dog clutches) can alternate to the input shaft 10 and the output shaft 20, resulting in a free (able to rotate freely when not engaged with the shaft) divided gear wheel being followed by a constantly engaged gear wheel (can be a divided gear wheel as mentioned before), on each shaft. In any case and for the presented exemplary layout, as mentioned before, each gear ratio is defined again by a set of a free divided gear wheel and a constantly engaged gear wheel (can be a divided gear wheel as mentioned before).

From this depiction, the positioning of the dog clutch 300 for the presented configuration, is clearer. The dog clutch 300 is in between the presented divided gear wheels (or gear wheels in general when the engageable gear wheels alternate on the input and output shafts) and is consisted by a dog clutch hub 310 and two engagement components 320 providing the engagement means (teeth) 330 which engage to the inner parts 230.

The dog clutch hub is constantly engaged with the assigned shaft (in this configuration the assigned shaft is the output shaft 20) and the engagement component 320 are able to slide axially, engaging or disengaging to the according inner part. Both engagement components 320 are torque proof engaged (but can slide axially) to the dog clutch hub 310 and the face of the one engagement component faces the one gear ratio, while the face of the other engagement component faces the other gear ratio. In addition the engagement components 320, have shifting fork grooves 321 on their outer circumferential surface that house the shifting forks 410, that adjust the axial (in relation to the axis of the assigned shaft) position of the engagement components 320, with the help of a shifting mechanism(s).

As can be seen from this horizontal section cut, gear ratio "a" is selected, since the engagement component 320a is engaged with the inner part 230a. By this engagement the inner part 230a of the divided gear wheel 200a is torque proof engaged with the output shaft 20 (i.e. both output shaft 20 and inner part 230a rotate with the same angular speed). When springs 252a, 253a, 254a, 255a are fully loaded, both inner part 230a and outer part 232a will rotate with the same angular speed, and torque transfer will be accomplished exclusively via gear ratio "a" (only one engagement component 320 is engaged with the inner part 230 in the entire configuration, i.e. the gear changing action has been completed).

As can be seen, when the engagement component 320a is engaged with the inner part 230a and the gear ratio changing action is completed, every other engagement component 320 will be disengaged. During gear ratio changing actions, more than one engagement component 320 might be engaged with the corresponding inner parts 230.

In this portrayal, the engagement component 320a, is assigned to engage (and is presented as engaged) with the inner part 230a. The engagement takes places with the interaction between the engagement means (teeth) 330a, positioned on the front face of the engagement component 320a and the corresponding engagement means 231a, positioned on the front face of the inner part 230a.

As a person skilled in the art understands, in order to upshift (change gear from gear ratio "a" to gear ratio "b"), the engagement component 320a will remain engaged with the inner part 230a as the engagement component 320b is moved axially by the corresponding shifting mechanism(s) [the shifting mechanism(s) is controlled by a Central Processing Unit, that after taking account of certain parameters and fed data, commands the shifting mechanism to perform a gear changing action]. When the engagement means (teeth) 330b of the engagement component 320b, initiate to interact with the engagement means 231b of the inner part 230b of the divided gear wheel 200b, the springs 253b and 255b (which have smaller spring rate in relation to springs 252b and 254b, i.e. springs 252b and 254b are stiffer) will start to compress. At this moment the engagement component 320a is still engaged with the inner part 230a and most of the power is transferred via gear ratio "a" (a relatively small amount of power is transferred from gear ratio "b", since it is partially engaged with the shaft and the "softer" springs have started to compress). The softer spring elements 253b and 255b, compress initially by the interaction of both inner part 230b and outer part 232b of the divided gear wheel 200b and the compression of the stiffer spring elements 252b and 254b follows. When the stiffer spring elements 252b and 254b compress, the softer spring elements 253b and 255b continue to compress as well, due to the positioning of the four spring elements (252b, 253b, 254b, 255b). As the load being borne by the springs of gear ratio "b" progresses, the load being borne by the springs of gear ratio "a", decreases, and when the springs of the gear ratio "a" are unloaded, the CPU commands the shifting mechanism(s) to disengage the engagement component 320a. The "softer" springs provide time, so that the engagement component 320, engages completely with the inner part 230 of the divided gear wheel 200.

In order to downshift (change gear from gear ratio "b" to gear ratio "a"), the general outline is generally the same as descripted above. The engagement component 320b is now engaged with the inner part 230b of the divided gear wheel 200b, and the engagement means (dog clutch ring teeth) 330b interact with the engagement means 231b. According measurements are taken from according sensors and a gear changing action takes place [again with the help of a Central Processing Unit and corresponding shifting mechanism(s)]. As a person skilled in the art understands there are three situations / scenarios in relation to the status of the springs 250 inside the engaged divided gear wheels 200. In the first scenario, the springs 250 inside the engaged divided gear wheel 200, compress rotating in a counterclockwise motion, meaning that the accelerator pedal is pressed (power flow from the engine to the wheels). The second scenario is when the springs 250 inside the engaged divided gear wheel 200, compress rotating in a clockwise motion, meaning that the accelerator pedal is not pressed (power flow from the wheels to the engine). The third scenario is when the springs 250 inside the engaged divided gear wheel 200 are decompressed (neutral state). The status of the springs 250 inside the divided gear wheel 200 is known to the CPU with the help of angular position sensors that identify the position for both the inner part 230 and the outer part 232 of the divided gear wheel 200.

In the first scenario, the moment a downshifting action is commanded, a simultaneous command is being given to the engine in order to momentarily interrupt the power (idling), and the disengagement of the engagement component 320b from the inner part 230b initiates, with a simultaneous engagement of the engagement component 320a to the inner part 230a. When the engagement/disengagement has been completed (linear position sensors will assists, by defining the linear position of the engagement components), the engine will continue supplying power depending on the position of the gas pedal (when the engagement/disengagement is completed, the power supply in relation to the accelerator pedal will follow).

In the second scenario, an engagement command is given by the CPU to engage the inner part 230a of the divided gear wheel 200a of gear ratio "a" with the assigned engagement component 320a while the inner part 230b of the divided gear wheel 200b is still engaged with the assigned engagement component 320b. When this engagement takes place, the engine's revolutions increase (input rpm) and as a result, the springs 250b, inside the divided gear wheel 200b, start to decompress, allowing for a disengagement command to take place, deselecting gear ratio "b".

The gear ratios "a" and "b" are exemplary gear ratios. The operation is analogous to any consecutive gear ratio in a power transmission system.

In both upshifting and downshifting, as previously mentioned, a Central Processing Unit (CPU) is the one that commands the shifting mechanism(s) to move the desired engagement component 320 in order to engage (or disengage) to the corresponding inner part 230 [via the engagement means (teeth) 330] of the divided gear wheel 200. The CPU takes account of different measurements (e.g. engine's revolution, vehicle velocity, selected gear ratio, angular position of the inner / outer parts of the divided gear wheel, linear and angular position of the engagement component etc.) from according measuring instruments (e.g. linear and angular position sensors etc.) before commanding the gear changing action. The driver can manually command a gear changing action (for example by pressing a button).

As can be understood from the above description in both cases (upshifting and downshifting) when the gear changing action is completed, only one inner part 230 is engaged with the assigned shaft (in the presented configuration output shaft 20) via engagement component 320. During the gear changing action, more than one engagement components 320 can at least be partially engaged with their assigned inner parts 230.

Figure 3 is a schematic illustration of the components consisted the dog clutch 300 in an exploded perspective layout.

More specifically the dog clutch 300 is consisted by three main components. The first is the dog clutch hub 310 and the other two are engagement components 320, housed to the hub, opposing to each other (i.e. the face of the one engagement component 320a "meets" the one face of the dog clutch hub and the other face of the other engagement component 320b "meets" the other). The dog clutch hub 310 is constantly engaged with the assigned shaft, for example with splines on the inner circumference as depicted in this view. The engagement components 320 are housed to the dog clutch hub 310, constantly interacting with the dog clutch hub 310 and guided by guiding means 350 which are positioned on the outer circumferential surface of the dog clutch hub 310. By the constant interaction of the engagement components 320 with the dog clutch hub 310, both parts are torque proof engaged and rotate with the same angular velocity. Since the dog clutch hub 310 is constantly engaged with the assigned shaft (i.e. rotates with the same angular velocity), both the assigned shaft, the dog clutch hub 310 and the housed engagement components 320 are torque proof engaged and rotate with the same angular velocity. In addition both engagement components 320 can be moved axially by shifting mechanism(s) resulting in engagement (or disengagement) with the assigned part (inner part of the divided gear wheel). The shifting fork(s) 410 are engaged in a rotationally free manner with the engagement components 320a, 320b.

In the presented layout the guiding means - channels 350 are presented as linear grooves/splines (it is obvious that can be either protrusions or cavities). In another alternative guiding means - channels 350 can be shaped as helixes (i.e. formed in a shape similar to a helical gear) with a corresponding change in engagement means 360. As a person skilled in the art understands, in that case, engagement components 320, in addition to the axial movement, will also have a rotational one. As a result when the shifting mechanism(s) pulls (or pushes) the corresponding engagement component 320 in order to engage (or disengage), the engagement component will have an additional angular velocity (increasing or decreasing the angular velocity of the engagement component 320 in relation to the angular velocity of the assigned shaft) depending on how fast (or slow) shifting mechanism(s) actuates the engagement component 320 and the helix characteristics, in order to achieve equal angular velocities between the engaging components (i.e. engagement component 320 and inner part 230 of the divided gear wheel 200). By this feature smoother engagement between the engaging components can be achieved since the engaging components will have same (or similar) angular velocities. The guiding means - channels 350 interact with the engagement means 360 of the engagement component 320, allowing axial (or axial and rotational) movement to the engagement component 320 with constant engagement to the dog clutch hub 310.

The engagement means (teeth) 330 that will interact with the at least one engagement mean 231 of the inner part 230 of the divided gear wheel 200, is positioned, as can be seen in the exemplary layout, on the front face of each engagement component 320. As it is obvious more (or less) engagement means (teeth) 330 can be adapted in the configuration. In addition other arrangements are acceptable always in relation to the positioning (and the number) of the engagement means 231.

In the presented layout, the engagement means (teeth) 330 are presented as protrusions but in other alternatives can be shaped as recesses or a combination of both always in relation to the engagement means 231 of the inner part 230 of the divided gear wheel 200. Additionally the engaging surfaces 340 can be angled assisting the disengagement (or engagement) of the engagement component 320. It is going again without mentioning that all the changes adapted by the engagement means (teeth) 330 are always made in relation, and with analogous changes, to the engagement means 231 of the inner part 230 of the divided gear 200, resulting in perfect match upon engagement.

In addition every engagement component 320 has a shifting fork groove 321 that houses the assigned shifting fork 410. The shifting fork 410 is not rotatably connected to the engagement component 320 (i.e. the engagement component 320 can rotate with the shifting fork 410 not following the rotation). The shifting fork protrusion 411 is guided in a way that the shifting fork 410 is axially moved, in relation to the axis of the assigned shaft. Since the shifting fork 410 is attached to the engagement component 320, the two are axially (in relation to the axis of the assigned shaft) moved together.

Figure 4 is a schematic illustration of the inner part 230 and the outer part 232 of the divided gear wheel 200 in a perspective layout.

In this depiction, the engagement means 231 of the inner part 230 of the divided gear wheel 200 can be seen. As mentioned before the engagement means 231 are in accordance with the engagement means (teeth) 330 of the engagement component 320. The engagement means 231 of the inner part 230 are presented as enlarged recesses since the engagement means (teeth) 330 of the engagement component 320 have been previously presented as protrusions. The enlarged form of the engagement means 231 is selected since it will assist with the engagement between the two components. In addition the number of recesses and protrusions (or vice versa, or a combination of both in alternative designs) between the two engaging components are in accordance to each other. In other words if, exemplarily, four protrusions are provided by the engagement component 320, the inner part 230 of the divided gear wheel 200 will provide four recesses. Furthermore as mentioned before the engaging surfaces are in relation to each other. If, for example, the engaging surfaces 340 of the engagement means (teeth) 330 are perpendicular, in relation to the face of the engagement component 320, the engaging surfaces 241 of the inner part 230 of the divided gear wheel 200 will again be perpendicular in relation to the face of the inner part 230.

In addition in this exemplary configuration spring support 234 of the inner part 230 of the divided gear wheel 200, is positioned between the two elements consisting spring support 233 of the outer part 232 of the divided gear wheel 200, and as a result the two parts (inner part 230 and outer part 232, do not collide to each other). It is going without saying that other forms for both spring supports 233, 234 can be adopted.

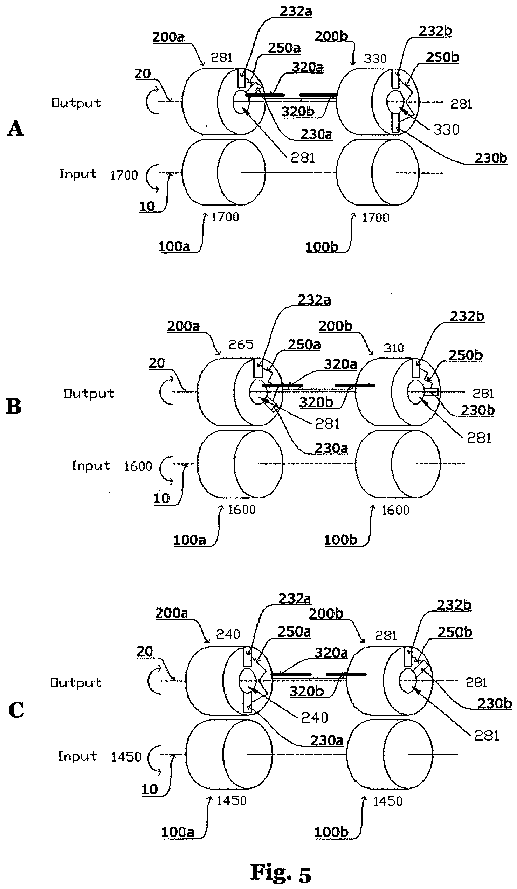

Figure 5A to C give a schematic illustration of a gear ratio changing action sequence, using random numbers and random gear ratios. More particularly there is an upshifting gear ratio changing action from gear ratio "a" to gear ratio "b". For this example a heavy vehicle (e.g. truck), with the following gear ratios: gear ratio "a" = 6.05, gear ratio "b" = 5.16 are selected and the numbers are integral. It is going without saying that the two gear ratios presented are not the only gear ratios of the automotive power transmission system, but are presented in order to explain the gear changing action.

In this set of figures two gear ratios (four gear wheels in total) are presented with a dog clutch 300 in between them in accordance to the previously mentioned layouts. The divided gear wheels 200a and 200b are supported by the output shaft 20 and the gear wheels 100a and 100b are supported by the input shaft 10. Each gear ratio is formed by one divided gear wheel 200 and one gear wheel 100, constantly meshing to each other but can transfer torque to the output shaft 20 only when the divided gear wheel 200 is engaged with the output shaft 20 with the help of dog clutch 300 (engagement components 320 are presented as bold lines, one for each gear ratio). As a consequence gear ratio "a" is formed by divided gear wheel 200a and gear wheel 100a and gear ratio "b" by divided gear wheel 200b and gear wheel 100b.

In figure 5A the divided gear wheel 200a is torque proof engaged with the output shaft 20 and gear ratio "a" is selected. At this moment the divided gear wheel 200b is disengaged and rotates, due to the fact that it is meshing with the constantly engaged (to the input shaft) gear wheel 100b. As mentioned before the gear wheels 100a and 100b are constantly engaged with the input shaft 10 and the divided gears 200a and 200b can rotate freely when they are not engaged with the output shaft 20 (with the help of the dog clutch 300), but are torque proof engaged with the output shaft 20 upon engagement. The input shaft 10 rotates, for example, with 1700 revolutions per minute (rpm) and the output shaft 20 rotates with 281 rpm due to the fact that gear ratio "a" is selected (i.e. dog clutch 300 is engaged to gear ratio "a"). Divided gear 200b rotates with 330 rpm, but does not transfer torque to the assigned shaft, since is not engaged with the shaft via an engagement component 320b. The divided gear wheel 200b rotates due to the fact that is constantly meshing with gear wheel 100b, which rotates with 1700 rpm, since is constantly engaged with the input shaft 10.

Springs 250 are fully loaded in both gear ratios "a" and "b", but the springs 250a are fully compressed (since gear ratio "a" is selected), and the springs 250b are decompressed (since gear ratio "b" is not engaged with the dog clutch 300). In either case (decompression or fully compression) the springs 250 are fully loaded. The difference between the two conditions is the occurring load that results in the according compression. In the case that the spring 250a is fully compressed, the applied load to the spring is great, resulting in larger deformation/compression. In gear ratio "b" the spring is, again fully loaded, but not compressed due to the fact that the applied load is minimum as a result of the unengaged, free to rotate divided gear wheel. As a person skilled in the art understands, the springs of the unengaged free to rotate divided gear wheel, might compress slightly due to the interaction between the connected (via the springs) components (bearing losses, meshing teeth friction, inertia), but since there is no significant resistance (by the unengaged inner part of the divided gear wheel) the term fully decompressed is used. In addition the term fully loaded or fully compressed is used when the springs have altered their length (lengthened or shortened) under the occurring load and the disfigurement is completed.

As can be seen in figure 5B a gear changing action (from gear ratio "a" to gear ratio "b") is commanded and after certain processes in the CPU, the engagement component 320b assigned to the divided gear wheel 200b is moved by a shifting mechanism and engages with the inner part 230b. The engagement component 320a assigned to the divided gear wheel 200a is still engaged with the inner part 230a of the divided gear wheel 200a. As a consequences both inner parts 230 of the divided gear wheels 200a and 200b are engaged with the output shaft 20 via their assigned engagement components 320 (e.g. dog clutch rings).

Now the inner part 230b of the divided gear wheel 200b, rotates with 281rpm since is now torque proof engaged with the assigned output shaft 20 due to the dog clutch engagement. Since the input rotations from the engine is 1700rpm and the outer part 232b of the divided gear wheel 200b rotates with 330rpm, springs 250b inside the divided gear wheel start to compress bearing load.

As a person skilled in the art understands, as the time passes, the load being borne by the springs 250b inside the divided gear wheel 200b increases and at the same time the load being borne by the springs 250a inside the divided gear wheel 200a decreases.

At this moment, both inner parts 230a, 230b of the divided gear wheels 200a, 200b are engaged with the output shaft 20, and therefore power is transferred via both gear ratios "a" and "b". As it is obvious, as the time passes, more power is delivered to the output shaft 20 via gear ratio "b" and less via gear ratio "a".

An intermediate moment is presented in figure 5B in which, for example, inner part 230b of the divided gear wheel 200b rotates with 281rpm, outer part 232b of the divided gear wheel 200b rotates with 310rpm and gear wheel 100b rotates with 1600rpm. In addition the inner part 230a of the divided gear wheel 200a rotates with 281rpm and gear wheel 100b rotates with 1600rpm.

As can be seen due to the difference in angular velocities between the inner parts 230a, 230b of the divided gear wheels 200a, 200b and the angular velocities between their coupled outer parts 232a, 232b of the divided gear wheels 200a, 200b, springs 250a decompress and springs 250b compress.

When all of the power from the input shaft 10 is delivered to the output shaft 20 via gear ratio "b" the springs 250a inside the divided gear wheel 200a of gear ratio "a" will be fully decompressed and the disengagement of the inner part 230a of the divided gear wheel 200a can take place.

In figure 5C all of the power is delivered to the output shaft 20 via gear ratio "b", and as a result springs 250a inside the divided gear wheel 200a are fully decompressed. The CPU is aware of the nearly fully decompressed springs 250a, due to the fact that corresponding angular position sensors are adapted, and as a consequence, commands a disengagement action to begin, disengaging the inner part 230a of the divided gear wheel 200a.

Now all of the power is delivered via gear ratio "b". The inner part 230b and the outer part 232b of the divided gear wheel 200b rotate with 281rpm. In addition gear wheel 100b rotates with 1450rpm and so does the gear wheel 100a and the engine. Divided gear wheel 200a is ungagged and therefore free to rotate, rotating with 240rpm due to the meshing with gear wheel 100a.

As can be seen from the above the gear changing action is completed and now the power is transferred via gear ratio "b", with a continuous, smooth, uninterrupted power transfer from gear ratio "a" to gear ratio "b" and with a corresponding "drop" of rpm to the engine (from the initial 1700 to 1450).

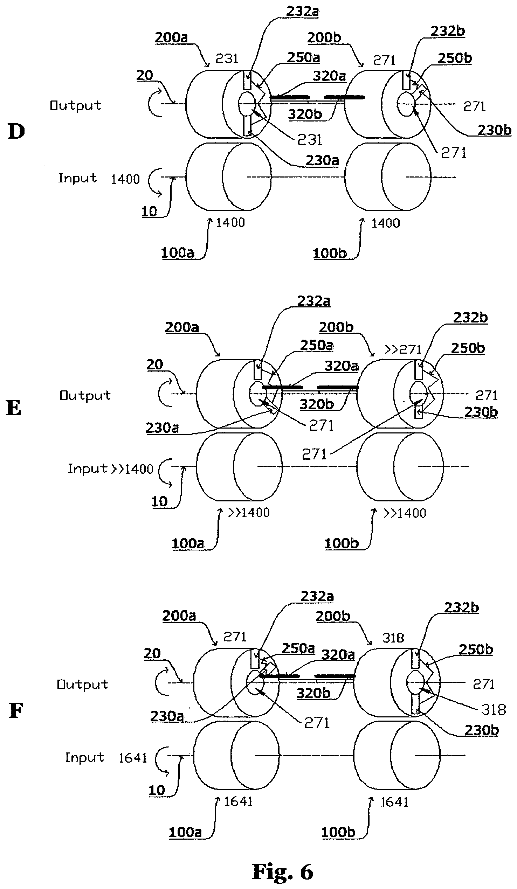

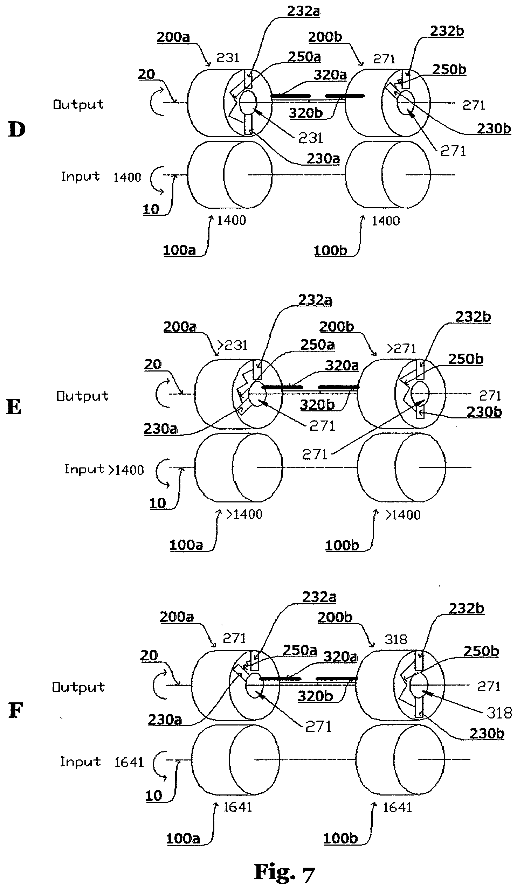

In figures 6D to 6F and 7D to 7F an example for a gear changing action for a heavy vehicle (e.g. truck) is presented and more specifically a downshifting gear changing action (i.e. from gear ratio "b" to a lower gear ratio "a"). The first three figures (from 6D to 6F) present a downshifting gear changing action with the accelerator pedal pressed and the last three (from 7D to 7F) with the accelerator pedal not pressed.

The configuration is similar to the one described in figures 5A to 5C.

As can be seen in figure 6D the inner part 230b of the divided gear wheel 200b is engaged with the output shaft 20 and the divided gear wheel 200a is disengaged and as a result free to rotate. As a consequence gear ratio "b" is selected and the output is 271rpm with an input of 1400rpm. Both the gear wheels 100a and 100b rotate with 1400rpm (due to the constant engagement to the input shaft 10).

Springs 250a are fully decompressed and springs 250b are fully compressed. Inner part 230a and outer part 232a of the divided gear wheel 200a rotate with 231rpm and inner part 230b and outer part 232b of the divided gear wheel 200b rotate with 271rpm, due to their meshing with gear wheels 100a and 100b respectively.

A gear changing action from the selected gear ratio "b" to the previous gear ratio "a" (downshifting) is commanded by the CPU, with the accelerator pedal pressed (first scenario).

In figure 6E the downshifting action has initiated. CPU commands the engine to a power cut (idling). As a result springs 250b inside the divided gear wheel 200b start to decompress and a disengagement command (from the CPU) can initiate, in order to disengage the inner part 230b of the divided gear wheel 200b. As mentioned before CPU acknowledges that springs 250b inside the divided gear wheel 200b have been decompressed via angular position sensors. At the same time an engagement command (from the CPU) can take place, engaging the inner part 230a of the divided gear wheel 200a with the assigned engagement component 320a and power from the engine is resumed, in relation to the position of the gas pedal.

As a result the inner part 230a of the divided gear wheel 200a rotates with 271rpm. Since the accelerator pedal is pressed, engine's revolutions increase (input rpm), and as a result the outer part 232a of the divided gear wheel 200a increases its revolutions until reaching 271rpm. Due to that, springs 250a inside the divided gear wheel 200a begin to compress.

In figure 6F the engagement/disengagement has been completed and now both inner part 230a and outer part 232a of the divided gear wheel 200a rotate with 271rpm and springs 250a inside the divided gear wheel 200a are compressed. As a consequence the input shaft 10 rotates with 1641rpm, gear wheels 100a and 100b rotate also with 1641rpm and both inner part 230b and outer part 232b of the divided gear wheel 200b rotate with 318rpm with springs 250b inside the divided gear wheel 200b being decompressed. Therefore gear ratio "a" is selected with the divided gear wheel 200a engaged with the assigned output shaft 20 and the divided gear wheel 200b disengaged and as a result free to rotate.

In the next three figures (from 7D to 7F) a downshifting gear changing action with the accelerator pedal not pressed (second scenario) is presented. In relation to the first scenario (accelerator pedal pressed) presented in the three previous figures, the direction of compression for the springs 250 inside the divided gear wheel 200 is in a clockwise manner.

As can be seen in figure 7D springs 250 inside the divided gear wheel 200 compress in a clockwise direction. As can be seen springs 250b inside the divided gear wheel 200b are compressed and springs 250a inside the divided gear wheel 200a are decompressed. In addition both the input shaft 10 and gear wheels 100a, 100b rotate with 1400rpm, both the inner part 230a and the outer part 232a of the divided gear wheel 200a rotate with 231rpm and both the inner part 230b and outer part 232b of the divided gear wheel 200b rotate with 271rpm.

The CPU commands a gear changing action from gear ratio "b" to gear ratio "a" and as a consequence the engagement of the inner part 230a of the divided gear wheel 200a with the assigned engagement component 320a takes place.

In figure 7E the now engaged inner part 230a of the divided gear wheel 200a rotates with 271rpm and springs 250a inside the divided gear wheel 200a begin to force the outer part 232a of the divided gear wheel 200a to rotate with more than 231rpm.

Since the outer part 232a of the divided gear wheel 200a meshes with gear wheel 100a, gear wheel 100a is forced to rotate with more than 1400rpm and so does gear wheel 100b.

In addition gear wheel 100b meshes with the outer part 232b of the divided gear wheel 200b, forcing it to rotate with more than 271rpm while the inner part 230b of the divided gear wheel 200b rotates with 271rpm, and as a result springs 250b inside the divided gear wheel 200b start to decompress and a disengagement command (inner part 230b of the divided gear wheel 200b to be disengaged from the assigned engagement component 320b) is given by the CPU.

In figure 7F the engagement/disengagement has been completed and both inner part 230a and outer part 232a of the divided gear wheel 200 rotate with 271rpm and springs 250a inside the divided gear wheel 200a are compressed. Input shaft 10 rotates with 1641rpm, and gear wheels 100a, 100b also rotate with 1641rpm (due to the meshing with divided gear wheel 200a). Furthermore both inner part 230b and outer part 232b of the divided gear wheel 200b rotate with 318rpm and springs 250b inside the divided gear wheel 200b are decompressed. Therefore gear ratio "a" is selected with the divided gear wheel 200a engaged with the assigned output shaft 20 and the divided gear wheel 200b disengaged and as a result free to rotate.

As a person skilled in the art understands, in case springs 250b inside the engaged divided gear wheel 200b are decompressed (third scenario) the operation is the same as the first and second scenarios presented in figures 6E, 7E and 6F, 7F.

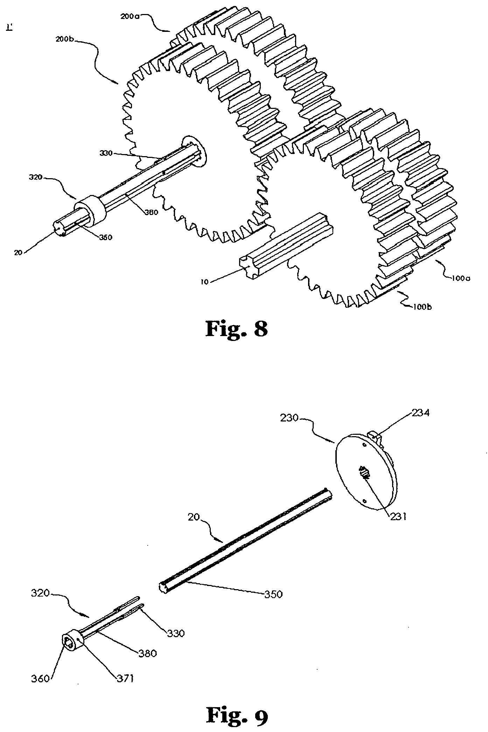

In figure 8 an alternative configuration of a power transmission system 1' is presented, in which the engagement component 320 is directly supported on the assigned shaft (absence of dog clutch hub) and one engagement component 320 is assigned to multiple divided gear wheels. The axial movement of the engagement component 320 by according shifting mechanism(s), engages (or disengages) the inner part 230 of the divided gear wheels 200, and therefore a gear ratio is selected.

The main principles behind this alternative configuration is the same as previously described, where a gear ratio is defined by a set of gear wheels in which at least one gear wheel is a divided gear wheel as described above. In every gear ratio one gear wheel is engageable (engaged upon interaction with the engagement component 320) to the assigned shaft and the other is constantly engaged with the assigned shaft (as mentioned before in an alternative configuration both gear wheels consisting a gear ratio can be divided gear wheels with the one divided gear wheel constantly engaged with the assigned shaft and the other engageable, free to rotate when not engaged). As mentioned before the engageable gear wheel can rotate freely, without transferring torque to the assigned shaft when it is not engaged (to the assigned shaft). The engageable gear wheel is the divided gear wheel.

In this alternative the engagement component 320 is not in between the divided gear wheels but it is, exemplarily, positioned before the gear ratio "b", as defined by the interaction of gear wheel 100b and divided gear wheel 200b. Output shaft 20 supports output gear wheels 200a, 200b and input shaft 10 supports input gear wheels 100a, 100b. Input gear wheels 100a, 100b are constantly engaged with the assigned input shaft 10 and divided gear wheels 200a, 200b are engaged with the assigned output shaft 20 by interacting with engagement component 320.

Engagement component 320, is axially pushed (or pulled) by according shifting mechanism(s) (with the assistance of a CPU as previously described) and is guided by guiding means 350, which are integrally formed to the output shaft 20 which are (exemplarily) presented as linear grooves (in yet another alternative the grooves can be helical with an analogous operation as previously described, in the guiding means of the dog clutch hub 310, i.e. additional angular velocity upon axial displacement).

As can be seen in more detail in figure 9, engagement component 320 is consisted by a bushing portion 371 and at least one engagement component arm 380 extending from the bushing portion 371 and, provided at the distal end, corresponding engagement means (teeth) 330, which are adapted to engage with the engagement means 231 of the inner part 230 of the divided gear wheel 200. Engagement component 320 is torque proof engaged with the assigned output shaft 20 (for example with the help of engagement means 360 on the inner circumference of the bushing portion 371) but can be axially moved [by shifting mechanism(s)]. It is guided (due to the interaction with the engagement means 360) by guiding means 350 (linear as presented or helical in an alternative) integrally formed to the output shaft 20 and engagement means (teeth) 330 adapted to engage with the engagement means 231 of the inner part 230 of the divided gear wheel 200.

As a person skilled in the art understands, the engagement means (teeth) 330 of the engagement component 320, have a length suitable for engaging the inner parts 230. In this alternative for every gear change, a momentarily power interruption (idling) from the engine should take place. Alternatively an increased power supply in the shifting mechanism(s) is needed in order to actuate the engagement component (for upshifting or downshifting) as a person skilled in the art understands.

In addition the engagement means 231 are not positioned on the front face of the inner part 230 of the divided gear wheel 200, but are on the inner circumference of the inner part 230. In this alternative the number of engagement means 231 do not have necessarily be in relation to the engagement means (teeth) 330. For example the number of engagement means 231 provided by the inner part 230 can be greater than the number of engagement means (teeth) 330 provided by the engagement component 320, resulting in an easier engagement between the two components.

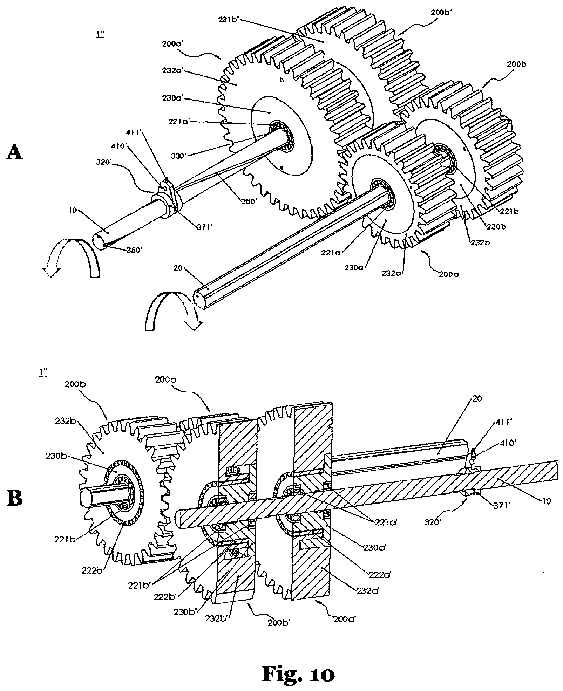

In figure 10A to B an alternative configuration, similar to the one presented in figures 8 and 9 is presented.

As can be seen in figure 10A the alternative configuration is pretty much alike to the one presented in figures 8 and 9, but in this configuration every gear ratio is consisted by two divided gear wheels 200, 200', with the divided gear wheel 200 supported by the output shaft 20 and the divided gear wheels 200' supported by the input shaft 10. Furthermore the divided gear wheel 200' is provided as a free divided gear wheel and the divided gear wheel 200 is provided as engaged divided gear wheel, with the inner part 230' torque proof engaged with the assigned output shaft 20. As a consequence each gear is consisted by one engageable free to rotate (when is not engaged with the assigned input shaft 10) divided gear wheel and one engaged with the assigned output shaft 20 divided gear wheel 200. In addition the guiding means 350' are provided as helical guiding means (instead of the previously described linear) with an according modification in the engagement component 320', that is assigned to the input shaft 10 instead of the output shaft 20 as described in the previous alternative configuration of figures 6 and 7.

As can be seen the engagement component 320' is torque proof engaged with the assigned input shaft 10, axially movable and able to be engaged with the inner parts 230' of the divided gear wheels 200' depending on the needs. Upon engagement the inner part 230' of the divided gear wheel 200' is torque proof engaged with the assigned input shaft 10.

As a person skilled in the art understands, due to the helical guiding means 350, when the input shaft 10 rotates, an axial (in relation to the main axis of the input shaft 10) force pushes the engagement component 320' towards the next gear ratio, and therefore assisting with the engagement of the engagement component 320' and the assigned inner pars 230' of the divided gear wheels 200' when upshifting.

In contrast when we want to downshift the method is similar to the previously described one.

Figure 10B depicts a more clear view of the divided gear wheels 200' of gear ratios "a" and "b" in which the position of the shaft bearings 221' and the inner part bearings 222' is clearer. As can be seen shaft bearings 221' (consisted of a set of bearings, one on each face of the divided gear wheel 200) are positioned between the inner part 230' of the divided gear wheel 200'and the assigned input shaft 10, and inner part bearings 222' between the inner part 230' and the outer part 232' of the divided gear wheel 200'. The layout of the divided gear wheels 200 is analogous to the one of divided gear wheels 200'. It is worth mentioning that the inner ring of shaft bearings 221' is shaped with respect to the shape of engagement component arms 380' (which are shaped according to the formation of guiding means 350') and to the engagement means 330' of the engagement component 320', in order the engagement component 320' to be able to pass through the shaft bearings 221', engaging / disengaging the inner part 230' of the divided gear wheels 200'.

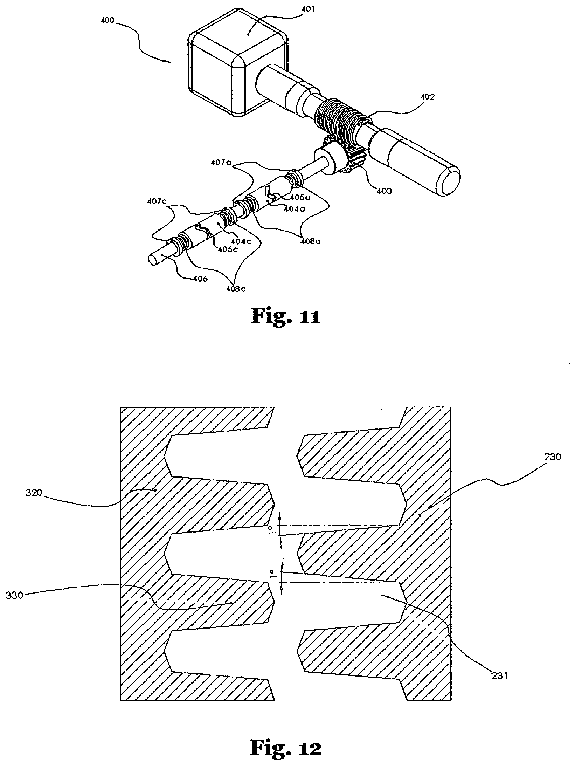

Figure 11 presents an exemplary shifting mechanism 400 with respect to all the previously presented configurations. As can be seen the exemplary shifting mechanism 400 (it is going without saying that other mechanisms can be adapted) is consisted by a step motor 401 that can rotate (in both directions) the worm shaft 402 and a worm wheel 403, meshing with the worm shaft 402. The worm wheel 403 is torque proof engaged to a splined shaft 406 that supports barrel cams 404 (i.e. when the worm wheel rotates, so does the barrel cams due to the fact that it is connected with splines to the splined shaft 406), which axially (in relation to the main axis of the assigned shaft) move the assigned engagement component 320, through the cam groove 405 and the interaction of the shifting fork protrusion 411 with the cam groove 405. The cam groove 405, guides the provided shifting fork protrusion 411, positioned exemplarily on top of the shifting fork 410.

As a result due to the formation of the cam groove 405, and due to the interaction of the shifting fork protrusion 411 with the cam groove 405, the engagement component 320 can be pushed (or pulled) to (or from) the assigned divided gear wheel 200, depending on the angular position of the barrel cam 404 (and as a consequence the angular position of the worm wheel 403).

In addition due to the worm drive (i.e. the worm shaft 402 meshes with the worm wheel 403), when the worm shaft 402 rotates, so does the worm wheel 403. In contrast the rotation of the worm wheel 403 is not permitted by the worm shaft 402. This feature secures the engagement component 320 in place (i.e. engaged or disengaged to the assigned inner part 230), even if there are axial (in relation to the main axis of the shaft) forces, forcing the engagement component 320 to disengage.

As mentioned before every divided gear wheel 200, has an assigned engagement component 320. As a result and since every engagement component 320 has an assigned shifting fork 410, the number of barrel cams 404, depends on the number of the divided gear wheels 200 selected in the power transmission system. In this depiction only two barrel cams 404 are presented but it is going without saying that more can be adapted. Furthermore preferably, each of the even number of gear ratios (i.e. 2^{nd}, 4^{th}, 6^{th} gear ratio etc.) will share a shaft 406 where the barrel cams 404 are housed and as a result one shifting mechanism 400 will be adapted for the even gear ratios. Consequently one other shifting mechanism 400 will be adapted for the odd number of gear ratios (i.e. 1^{st}, 3^{rd}, 5^{th} gear ratio etc.).

In addition due the splined shaft 406, the barrel cams 404 are provided as axially movable in relation to the main axis of the shaft 406. This feature is provided as a preventive measure in case the engagement means (teeth) 330 of the engagement component 320, do not "match" the engagement means 231 of the inner part 230 of the divided gear wheel 200. In that case although the engagement component 320 is forced to move towards the assigned inner part 230 of the divided gear wheel 200, this movement cannot take place and the provided springs 408 compress. In order for this compression to take place, the one end of springs 408 is on the face of barrel cams 404 and the other end meets the provided, fixed stop rings 407. Therefore even if the engagement means (teeth) 330 of the engagement component 320, do not "match" the engagement means 231 of the inner part 230 of the divided gear wheel 200, springs 408 will compress up till the "match" between the two is allowed. As a person skilled in the art understands when the presented shifting mechanism 400 is adapted, the engagement means 330 are lengthened.

In figure 12 a detail schematic illustration of the engagement between the inner part 230 of the divided gear wheel 200 and the engagement component 320 can be seen. In this demonstration, an exemplary engagement means (teeth) 330 formation can be seen. The engagement means (teeth) 330 of the engagement component 320, are shaped with slightly angled side surfaces resulting in additional axial force that assists with the disengagement of the engaging components. Due to the formation of the sides of the engagement means (teeth) 330 and the corresponding formation of the engagement means 231 of the inner part 230 of the divided gear wheel 200, an axial force (in relation to the shaft) is applied to the engagement component 320, forcing the engagement component 320, away from the assigned inner part 230, assisting with the disengagement.

As can be seen the engagement means (teeth) 330 are shaped with an 1° negative angle in both sides of the engagement means (teeth). Due to the negative angle the base of the engagement means (teeth) 330 are wider in relation to the top of the engagement means (teeth). The 1° angle is selected randomly and it is going without saying that any suitable inclination can be chosen.

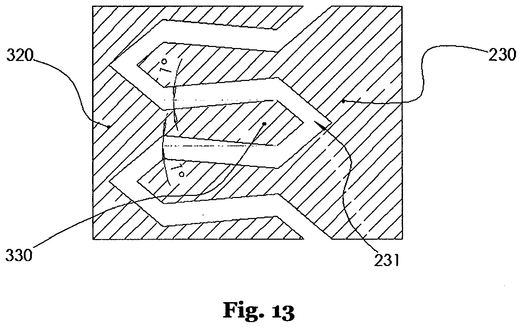

In figure 13 an alternative formation of the engagement means (teeth) 330 is presented. The figure is similar to the previously presented figure 12. In this alternative the sides of the engagement means (teeth) 330 are again shaped with a slight angle but the difference in comparison to the previously presented figure 12 lays on the fact that the chosen angle is positive, in comparison to the negative one.

As can be seen the sides of engagement means (teeth) 330 are shaped with an 1° positive angle in both sides of the engagement means (teeth). Again the engagement means 231 of the inner part 230 of the divided gear wheel 200 are shaped accordingly. The positive angle results in a narrower base in relation to the wider top of engagement means (teeth) 330.

The negative angle chosen for the sides of the engagement means (teeth) 330 (and the according formation of the engagement means 231 of the inner part 230 of the divided gear wheel 200) results in easier disengagement due to the axial force (in relation to the shaft) applied to the engagement component 320. In case a negative angle is selected, a shifting mechanism like the one presented in figure 11 is preferably applied in order to prevent the disengagement of the components when not desired. In contrast when a positive angle is selected, the prevention of disengagement is granted by the design.

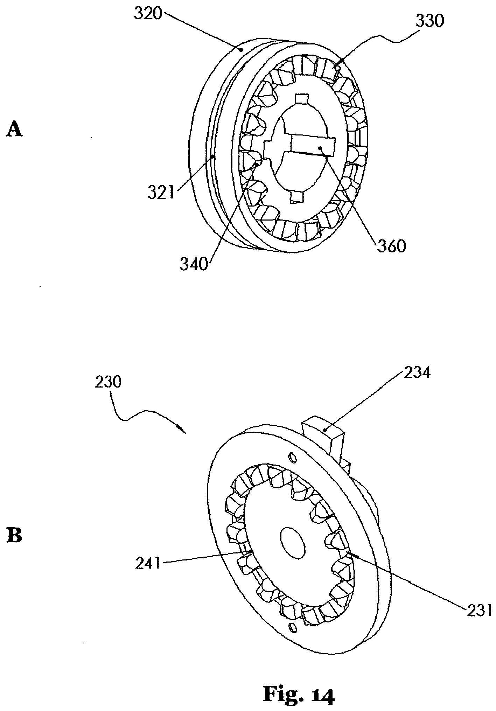

In figure 14, consisted by a set of figures an alternative way of interaction between the components that take part in an engagement can be seen. More specifically in figure 14A a perspective view of the engagement component 320 of a divided gear wheel 200 is presented, in which an alternative configuration of the engagement means (teeth) 330 can be seen. More specifically in this depiction the number of engagement means (teeth) 330 is significantly larger in comparison to the previously presented configurations.

In addition and with respect to the shape and plurality of the engagement means (teeth) 330, the engagement means 231 of the inner part 230 of the divided gear wheel 200 are reshaped accordingly, in order to have a complete engagement when desired. In figure 14B the corresponding form of the engagement means 231 of the inner part 230, that match the form of the engagement means (teeth) 330 of the engagement component 320 can be seen. In addition the "width" of the engagement means (teeth) 330 are equal to the "width" of the engagement means 231 (recesses) of the inner part 230 of the divided gear wheel 200.

It is worth mentioning that jackshaft can be adapted when is needed.

In addition the springs 252, 253, 254, 255 inside the divided gear wheel 200 act as a "channel" transferring force/and or power from the outer part 232 to the inner part 230 (and vice versa), with a corresponding deformation.

The above described power transmission systems, comprising at least one input shaft and at least one output shaft with at least one divided gear wheel in every gear ratio and at least one shifting mechanism that temporarily and/or instantaneously engages two different gear ratios, a CPU that commands a gear changing action after accessing and processing fed data from according measuring instruments and sensors, and a method for operating said power transmission system, allows for a continuous power transfer to the wheels during upshifting, minimizing shifting time and reducing power losses due to clutch disk friction.

### LIST OF REFERENCE SIGNS

- 1: power transmission system
- 10: input shaft
- 20: output shaft
- 100: gear wheel
- 115: gear tooth
- 200: divided gear wheel
- 215: divided gear wheel tooth
- 221: shaft bearings
- 222: inner part bearings
- 230: inner part
- 231: engagement means of inner part
- 232: outer part
- 233: outer part elastic element (spring) support
- 234: inner part elastic element (spring) support
- 241: inner part engaging surfaces
- 250: elastic element (spring element)
- 252: elastic element (spring element)
- 253: elastic element (spring element)
- 254: elastic element (spring element)
- 255: elastic element (spring element)
- 300: dog clutch
- 310: dog clutch hub
- 320: engagement component
- 321: shifting fork groove
- 330: engagement means (teeth)
- 340: engaging surfaces
- 350: guiding means
- 360: engagement component engagement means
- 371: bushing portion
- 380: engagement component arms
- 400: shifting mechanism
- 401: step motor
- 402: worm shaft
- 403: worm wheel
- 404: barrel cam
- 405: cam groove
- 406: splined shaft for barrel cams
- 407: stop ring
- 408: barrel cam springs
- 410: shifting fork
- 411: shifting fork protrusion

## Claims

1. A divided gear wheel (200), for a power transmission system (1), wherein the divided gear wheel (200) comprises
an inner part (230), being engageable with a shaft (10, 20) and
an outer part (232), comprising at least one tooth (215), adapted for torque transmission to another gear wheel, wherein
the inner part (230) and the outer part (232) have a common rotational axis, and wherein the inner part (230) is at least partially arranged within the outer part (232), wherein
the inner part (230) comprises engagement means (231) on one of its surfaces that are adapted to engage with an assigned engagement component (320) being torque proof engaged with the assigned shaft (10, 20), wherein upon engagement the inner part (230) is torque proof engaged with the assigned shaft (10, 20) of a power transmission system (1), wherein
the inner part (230) is coupled to the outer part (232) by means of at least one spring element (252, 253, 254, 255) preferably at least two spring elements (252, 253, 254, 255) and even more preferably at least four spring elements (252, 253, 254, 255), and wherein the spring elements (252, 253, 254, 255) are arranged evenly distributed in pairs in a circumferential direction, with the inner part (230) arranged angularly deflectable with respect to the outer part (232) around the common rotational axis, and wherein
each pair of spring elements has a first spring element (253, 255) partially arranged within a second spring element (252, 254) and protrudes out of the second spring element (252, 254) on a front face, and wherein
a spring constant of the first spring element (253, 255) is lower than a spring constant of the second spring element (252, 254) with the at least one spring element (252, 253, 254, 255) preferably received within at least one compartment, formed by the inner part (230) and the outer part (232) wherein
the inner part (230) comprises engagement means (231) on one of its surfaces that are adapted to engage with an assigned engagement component (320) being torque proof engaged with the assigned shaft (10, 20), wherein upon engagement, the inner part (230) is torque proof engaged with a shaft (10, 20) of a power transmission system (1), wherein
the inner part (230) and the outer part (232) are adapted to rotate with the same angular speed if the spring element (252, 253, 254, 255) is fully loaded.

2. A power transmission system (1), in particular for an automotive vehicle, comprising:
an input shaft (10), supporting input gear wheels (100, 200);
an output shaft (20), supporting output gear wheels (100, 200), wherein each of the input gear wheels (100, 200) engages with a corresponding output gear wheel (100, 200), thereby defining a gear ratio, wherein at least one of the input gear wheels (100, 200) and/or at least one of the output gear wheels (100, 200) of a gear ratio is a divided gear wheel (200) according to claim 1; and
at least one engagement component (320), assigned to at least one of the shafts (10, 20) and to at least one divided gear wheel (200), wherein the at least one engagement component (320) is torque proof engaged with the assigned shaft (10, 20), configured axially movable along the assigned shaft (10, 20) in order to select / deselect gear ratios, wherein the engagement means (330) of the at least one engagement component (320) are adapted to engage with / disengage from the engagement means (231) of the inner part (230) of the divided gear wheel (200) thereby torque proof fixing / unfixing the inner part (230) with the assigned shaft (10, 20).

3. The power transmission system (1) according to claim 2, wherein
the at least one engagement component (320) is arranged concentrically to the assigned shaft (10, 20), and has
engagement means (330) adapted to engage with / disengage from the engagement means (231) of the inner part (230) of the divided gear wheel (200), thereby torque proof fixing / unfixing the inner part (230) with the assigned shaft (10, 20),
wherein the at least one engagement component (320) is torque proof engaged with the assigned shaft (10, 20) and can slide axially with the help of at least one shifting mechanism (400), guided by guiding means (350) due to the interaction of the guiding means (350) with the corresponding engagement means (360) of the engagement component (320),
wherein the corresponding engagement means (360) of the engagement component (320) are shaped with respect to the form of the guiding means (350).

4. The power transmission system (1) according to any of claims 2 to 3, comprises at least one engagement component (320) with the engagement means (330) being adapted to engage with the corresponding engagement means (231) of the inner part (230) of the divided gear wheel (200),
wherein the engagement means (330) are provided in accordance to the selected position of the corresponding engagement means (231) of the inner part (230) of the divided gear wheel (200), and have a suitable form in order to deliver the appointed assignment.

5. The power transmission system (1) according to any of claims 2 to 4, wherein at least one gear ratio of the power transmission system (1) is defined by two divided gear wheels (200), according to claim 1, where the inner part (230) of the one divided gear wheel (200) is torque proof engaged with the assigned shaft (10,20) and the other inner part (230) of the other divided gear wheel (200) defining a gear ratio is engageable upon interaction with an assigned engagement component (320).

6. The power transmission system (1) according to any of claims 2 to 5, comprises jackshafts with gear wheels, wherein every gear wheel of the at least one jackshaft engages both the input gear wheels (100, 200) and the output gear wheels (100, 200).

7. The power transmission system (1) according to any of claims 2 to 6, further comprising at least one shifting mechanism (400) with a shift actuator, adapted to axially move the at least one engagement component (320), to select / deselect a gear ratio.

8. The power transmission system (1) according to any of claims 2 to 7, further comprising a control unit, position sensors and measuring instruments taking according measurements and providing them to the control unit, which is adapted to command a gear ratio changing action with the provision of respective commands to at least one shifting mechanism (400) after assessing and processing the provided data.

9. A method for operating a power transmission system (1) according to any of claims 2 to 8, the method comprising the following steps:
rotating the input shaft (10) and transferring power to the output shaft (20) by means of an initial gear ratio;
commanding a gear ratio changing action with the provision of respective commands to at least one shifting mechanism (400), after assessing and processing data in a control unit, from the initial gear ratio to a consecutive gear ratio;
axially moving at least one engagement component (320) and thereby engaging the at least one engagement component (320) to the at least one inner part (230) of the at least one divided gear wheel (200) of the consecutive gear ratio, thereby torque proof fixing the at least one divided gear wheel (200) of the consecutive gear ratio with the assigned shaft,
axially moving at least one engagement component (320) and thereby disengaging the at least one engagement component (320) from at least one inner part (230) of the at least one divided gear wheel (200) of the initial gear ratio,
rotating the input shaft and continuously transferring power to the output shaft during the gear changing action, until the entire power is transferred by means of a new gear ratio.

10. The method according to claim 9, wherein the form of the guiding means (350) forces the torque proof engaged with the assigned shaft (10,20), engagement component (320) to rotate, when moved axially by the shifting mechanism (400), assisting the engagement between the engagement component (320) and the inner part (230) of the divided gear wheel (200).

11. An automotive vehicle comprising a divided gear wheel (200) according to claim 1 or a power transmission system (1) according to any one of claims 2 to 10.

## Amended claims

### Amended claims in accordance with Rule 137(2) EPC.

1. A divided gear wheel (200), for a power transmission system (1),
wherein the divided gear wheel (200) comprises
an inner part (230), being engageable with a shaft (10, 20) and
an outer part (232), comprising teeth (215), adapted for torque transmission to another gear wheel,
wherein the inner part (230) and the outer part (232) have a common rotational axis, and
wherein the inner part (230) is at least partially arranged within the outer part (232),
wherein the inner part (230) comprises engagement means (231) on one of its surfaces that
are adapted to engage with an assigned engagement component (320) being torque proof engaged with the assigned shaft (10, 20),
wherein upon engagement the inner part (230) is torque proof engaged with the assigned shaft (10, 20) of a power transmission system (1),
wherein the inner part (230) is coupled to the outer part (232) by means of at least two spring elements (252, 253, 254, 255) and even more preferably at least four spring elements (252, 253, 254, 255), and
wherein the spring elements (252, 253, 254, 255) are arranged evenly distributed in pairs in a circumferential direction, with the inner part (230) arranged angularly deflectable with respect to the outer part (232) around the common rotational axis, and
wherein each pair of spring elements has a first spring element (253, 255) partially arranged within a second spring element (252, 254), and
wherein the first spring element (253, 255) protrudes out of the second spring element (252, 254) on a front face, and
wherein a spring constant of the first spring element (253, 255) is lower than a spring constant of the second spring element (252, 254) with the at least one spring element (252, 253, 254, 255) preferably received within at least one compartment, formed by the 30 inner part (230) and the outer part (232)
wherein the inner part (230) comprises engagement means (231) on one of its surfaces that are adapted to engage with an assigned engagement component (320) being torque proof engaged with the assigned shaft (10, 20),
wherein the inner part (230) and the outer part (232) are adapted to rotate with the same angular speed if the spring element (252, 253, 254, 255) is fully loaded.

2. A power transmission system (1), in particular for an automotive vehicle, comprising:
an input shaft (10), supporting input gear wheels (100, 200);
an output shaft (20), supporting output gear wheels (100, 200),
wherein each of the input gear wheels (100, 200) engages with a corresponding output gear wheel (100, 200), thereby defining a gear ratio,
wherein at least one of the input gear wheels (100, 200) and/or at least one of the output gear wheels (100, 200) of a gear ratio is a divided gear wheel (200) according to claim 1; and at least one engagement component (320), assigned to at least one of the shafts (10, 20) and to at least one divided gear wheel (200),
wherein the at least one engagement component (320) is torque proof engaged with the assigned shaft (10, 20), configured axially movable along the assigned shaft (10, 20) in order to select / deselect gear ratios,
wherein the engagement means (330) of the at least one engagement component (320) are adapted to engage with / disengage from the engagement means (231) of the inner part (230) of the divided gear wheel (200) thereby torque proof fixing / unfixing the inner part (230) with the assigned shaft (10, 20).

3. The power transmission system (1) according to claim 2,
wherein the at least one engagement component (320) is arranged concentrically to the assigned shaft (10, 20), and has engagement means (330) adapted to engage with / disengage from the engagement means (231) of the inner part (230) of the divided gear wheel (200), thereby torque proof fixing / unfixing the inner part (230) with the assigned shaft (10, 20),
wherein the at least one engagement component (320) is torque proof engaged with the assigned shaft (10, 20) and can slide axially with the help of at least one shifting mechanism (400), guided by guiding means (350) due to the interaction of the guiding means (350) with the corresponding engagement means (360) of the engagement component (320),
wherein the corresponding engagement means (360) of the engagement component (320) are shaped with respect to the form of the guiding means (350).

4. The power transmission system (1) according to any of claims 2 to 3, comprises at least one engagement component (320) with the engagement means (330) being adapted to engage with the corresponding engagement means (231) of the inner part (230) of the divided gear wheel (200),
wherein the engagement means (330) are provided in accordance to the selected position of the corresponding engagement means (231) of the inner part (230) of the divided gear wheel (200), and have a suitable form in order to engage for torque transmitting.

5. The power transmission system (1) according to any of claims 2 to 4,
wherein at least one gear ratio of the power transmission system (1) is defined by two divided gear wheels (200), according to claim 1,
wherein the inner part (230) of the one divided gear wheel (200) is engaged to the engagement component (320), which is torque proof engaged with the assigned shaft (10,20) and the other inner part (230) of the other divided gear wheel (200) defining a gear ratio is engageable upon interaction with an assigned engagement component (320).

6. The power transmission system (1) according to any of claims 2 to 5, comprises jackshafts with gear wheels,
wherein every gear wheel of the at least one jackshaft engages both the input gearwheels (100, 200) and the output gear wheels (100, 200).

7. The power transmission system (1) according to any of claims 2 to 6, further comprising at least one shifting mechanism (400) with a shift actuator, adapted to axially move the at least one engagement component (320), to select / deselect a gear ratio.

8. The power transmission system (1) according to any of claims 2 to 7, further comprising a control unit, position sensors and measuring instruments taking according measurements and providing them to the control unit, which is adapted to command a gear ratio changing action with the provision of respective commands to at least one shifting mechanism (400) after assessing and processing the provided data.

9. A method for operating a power transmission system (1) according to any of claims 2 to 8, the method comprising the following steps: rotating the input shaft (10) and transferring power to the output shaft (20) by means of an initial gear ratio; commanding a gear ratio changing action with the provision of respective commands to at least one shifting mechanism (400), after assessing and processing data in a control unit, from the initial gear ratio to a consecutive gear ratio; axially moving at least one engagement component (320) and thereby engaging the at least one engagement component (320) to the at least one inner part (230) of the at least one divided gear wheel (200) of the consecutive gear ratio, hereby torque proof fixing the at least one divided gear wheel (200) of the consecutive gear ratio with the assigned shaft, axially moving at least one engagement component (320) and thereby disengaging the at least one engagement component (320) from at least one inner part (230) of the at least one divided gear wheel (200) of the initial gear ratio, rotating the input shaft and continuously transferring power to the output shaft during the gear changing action, until the entire power is transferred by means of a new gear ratio.

10. The method according to claim 9,
wherein the form of the guiding means (350) forces the torque proof engaged with the assigned shaft (10,20), engagement component (320) to rotate, when moved axially by the shifting mechanism (400), assisting the engagement between the engagement component (320) and the inner part (230) of the divided gear wheel (200).

11. An automotive vehicle comprising a divided gear wheel (200) according to claim 1 or a power transmission system (1) according to any one of claims 2 to 10.
